# EUROPEAN PATENT SPECIFICATION

(11) **EP 2 514 588 B1**
(45) Date of publication and mention of the grant of the patent: **19.03.2014**
(21) Application number: 11188098.5
(22) Date of filing: 26.11.2008
(51) Int. Cl.: B32B 15/08, B29C 65/48, F16L 9/147

(54) **Coupling**
Kopplungselement
Couplage

(30) Priority: 30.11.2007 US 991383 P
(43) Date of publication of application: 24.10.2012
(62) Divisional of application: 08853428.4
(73) Proprietor: Lubrizol Advanced Materials, Inc., Cleveland, OH 44141-3247 (US)
(72) Inventor: Frimel, Robert M., Vermilion, OH Ohio 44089 (US); Olah, Andrew M., Spencer, OH Ohio 44275 (US)
(74) Representative: von Kreisler Selting Werner

(56) References cited:
- WO-A1-2008/038258
- WO-A1-2009/025136
- JP-A- 2001 200 980
- US-A- 4 157 194
- US-A- 4 236 953
- US-A- 5 368 338

## Description

### FIELD OF THE INVENTION

This invention relates to a coupling comprising an outer cylindrical barrel and a tapered inner barrel-shaped member. Also disclosed herein is a composite pipe which can be used with said coupling and which pipe is extruded so as to have (i) a metal conduit sandwiched between (ii) an inner conduit of either poly(vinyl chloride) ("PVC") or chlorinated poly(vinyl chloride) ("CPVC") adhesively secured to the inner surface of the metal conduit, and (iii) an outer conduit of either PVC or CPVC adhesively secured to the outer surface of the metal conduit. Each inner and outer conduit of PVC/CPVC (referred to as "polymer" for brevity) is adhered to the inner and outer surfaces of the metal conduit so strongly that the pipe meets the standards for both CTS and IPS pipe for hot and cold domestic water, and industrial systems for process fluid handling and for fire sprinkler systems. The circumferential cross-section of each terminal end (defining the surface of the rim of the end of the pipe) of a length of pipe is fitted with critically tapered bushings and fittings to negate flow of microscopic droplets of the fluid into the annular boundaries between polymer and metal.

### BACKGROUND OF THE INVENTION

Composite pipe, also referred to as multilayered metal pipe, has been disclosed in numerous references such as those listed on the first and second pages of U.S. Patent No. 6,293,311 to Bushi et al (the "'311 patent") which is the reference most relevant to the invention disclosed herein. The '31.1 patent teaches a composite pipe formed by extruding an inner conduit of PVC/CPVC; coating it with a first layer of an adhesive; forming the metal conduit over the adhesive-coated inner conduit by butt-welding the longitudinal edges of a strip of the metal after the strip was drawn down to provide a gap of less than 2 mm; optionally, heating the metal-sheathed inner conduit to activate the adhesive; coating the outer surface of the metal conduit with a second layer of adhesive; then, extruding an outer conduit of PVC/CPVC over the second layer of adhesive.

The adhesive in 311 is applied in two stages. A first layer of the adhesive may be heated to activate it so as to adhere the overlying metal conduit to the inner CPVC conduit, after the metal conduit is drawn down, to form a tri-layered conduit. A second layer of adhesive is then applied (col 10, lines 21-31). The suggestion of activating any of the wide spectrum of adhesives, if necessary, failed to suggest any particular adhesive. Moreover, the illustrative example was directed to the Estane® 58271 polyurethane, a thermoplastic, non-heat-activatable adhesive. There was no suggestion that a thermosetting bilayer adhesive be precoated on both sides of the metal strip prior to being formed into conduit, the adhesive resulting from the combination of a first primer layer and a second top-coat layer, the combination coated on each side of the metal strip, and dried. This two-layer thermosetting adhesive, described below, is referred to hereafter as the "bilayer adhesive".

The '311 disclosure relating to drawing down the metal to close "the gap between the metallic intermediate layer and the underlying adhesive of less than 2.0 mm" and optionally heating the underlying adhesive to "activate" it, failed to realize the criticality of tightly forming the metal strip around the inner conduit so as to leave a gap of less than 0.5 mm (0.020") between the closely adjacent edges of the strip, preferably less than 0.25 mm (0.010"), and also to leave a vertical space beneath the closely adjacent edges, sufficient to prevent the underlying polymer from being burned by the welding laser beam, this space being preferably in the range from 0.25 mm (0.010") to 0.75 mm (0.030"), measured vertically from beneath the edges of the metal.

The term "pipe" is used herein to refer to a composite pipe which meets CTS or IPS requirements, whether it is tubing or pipe. The term "conduit" is used herein to refer to the extruded inner and outer tubular layers of polymer, and to the tubular metal sandwiched between them; adhesive used to coat the inner and outer surfaces of the metal conduit are referred to as inner and outer layers of adhesive. By a conduit of "PVC/CPVC" is meant that the conduit may be either PVC or CPVC or a blend of PVC and CPVC. In the composite pipe, if the inner conduit is of PVC the outer may be either PVC or CPVC; and if the inner conduit is of CPVC the outer may be either PVC or CPVC; that is, the polymers may be the same or different in each layer ("mixed or matched"). PVC and CPVC are the predominate polymers to be used in the composite pipe disclosed herein. PVC and CPVC compositions both contain moderate amounts of other polymer materials, such as impact modifiers, processing aids and lubricants. The PVC or CPVC compositions of the conduits should have greater than 50, preferably greater than 70 and more preferably greater than 80 weight percent of the composition be either PVC or CPVC or a blend of PVC and CPVC.

It is critical, in interstate commerce, that the composite pipe of this invention meet the requirements of testing conditions specified by ASTM F1281, Sections 9.3, 9.4, 9.5 and ASTM D2846, ASTM D1785, AWWA C901, ASTM F493, PPI TR-3, and NSF/ANSI Standard 14, which are incorporated by reference thereto as if fully set forth herein. Pipe which meets the foregoing standards is referred to hereinafter as pipe which "meets required test conditions". In addition to meeting the required test conditions, the composite pipe can be used under pressure as high as 1.205 MPa (175 psi) and temperature as high as 82.2°C (180°F), in operable piping systems for water, aqueous solutions, aqueous suspensions and fluids to which the pipe is essentially inert. By "inert" is meant that the polymer does not significantly react with the fluid flowed through it, and is not substantially soluble in that fluid.

At the time the invention disclosed in the '311 patent was made, there was no reason to designate the composite pipe to meet the requirements of any particular ASTM standards, and less of a reason to determine the limits of the composite pipe's performance characteristics. Upon testing, it was found soon thereafter, that the composite pipe, formed with various adhesives suggested in the '311 patent, was adequate only for use at ambient room temperature in the range from 20°C-25°C (68°F-77°.F), and low pressure in the range from 790-928 KPa (100-120 psig) for relatively short periods of time.

More specifically, the pipe failed to meet the required test conditions throughout the range of required elevated temperatures and pressures of ASTM D2846/D 2846M-06 and the minimum ring peel strength specified therein.

It was subsequently realized, that with particular respect to PVC/CPVC, after an undue amount of trial and error including continuous investigation and testing of processing conditions over the past six years, laboriously testing numerous adhesives applied in different ways and over a wide range of conditions, and testing various machines in the process of forming the composite, only narrowly specified process conditions and the use of a bilayer adhesive, coated as a primer, then as a top-coat layer, on the metal strip in a very thin, dry coating which when heated above 48.9°C (120°F) results in an effective adhesive which provides a bond of metal, aluminum or steel, to PVC/CPVC so that the pipe meets required ASTM test conditions.

### The Problem:

The PVC/CPVC composite pipe of the'311 patent failed under required test conditions because of at least two reasons: inadequate adhesion between polymer and metal and inadequate welding to form the metal conduit. Moreover, despite all connections being solvent-cemented with a solvent-based cement, a piping system constructed with the fittings described in the '311 patent leaked at joints because the fittings failed to seal the circumferential cross-section of each terminal end (the rim, or the periphery of the pipe's end) where the cross-section exposes sequential layers of polymer, adhesive, metal, adhesive and polymer, before the end of the pipe is pressed into a fitting. The bilayer of adhesive is so thin as to be essentially invisible to the naked eye.

The inadequate adhesion between polymer and metal was evidenced by (i) separation between polymer and metal at the boundaries of successive circumferential layers, that is, at the polymer/adhesive/metal interfaces on the rim; (ii) rupture of the pipe under pressure of 1300 KPa (175 psig) at 65.5°C (150°F); and, (iii) separation between polymer and metal in the U-bend formed when the metal in the composite pipe is aluminum and the pipe is bent 180° with a radius less than about six (6) times the pipe's diameter; e.g., if a pipe having a nominal diameter of 2.54 cm (1") is bent with a bending tool or over a mandrel to form a U-bend having a radius of less than about 15.24 cm (6").

Failure due to lack of adequate adhesion does not typically occur in a composite pipe with polyethylene (PE), or, with cross-linked polyethylene (PEX) inner and outer layers, because the adhesive used is typically a maleated polyolefin adhesive. The structure of the adhesive is such that, when heated, it is incorporated into the surface of PEX in contact with the adhesive, thus providing excellent adhesion to the metal surface and the polyolefin. Further, in a PEX composite/multi-layer piping system, leaks are minimized because connections are made with mechanical fittings. These fittings compress the circumferential surface of the pipe in the fitting, around an inner, metallic bushing, sealing the connection. This choice is not available in a PVC/CPVC piping system in which all fittings are solvent-cemented. No prior art reference discloses or identifies an effective adhesive of extruded PVC/CPVC to steel or aluminum in a manner which enables one skilled in the art to find that adhesive and use it without an undue amount of trial and error. No prior art reference reasonably identifies an adhesive which provides the necessary bond between metal and inner and outer PVC/CPVC conduits, which bond is strong enough to meet required ASTM test conditions and provide continuous use over several decades. The adhesives used in the illustrative examples of the prior art are ineffective for the purpose at hand.

It was found that:
(i) though essentially any adhesive is disclosed as being useful in the '311 patent, and only the use of particular adhesives are illustrated, none is effective to meet required test conditions - only commercially available CIRE-10B from Mercural Corp., Colmar, France, believed to be a bilayer adhesive selected from (i) a thermosetting epoxy with a high molecular weight polyester adhesive for primer layer, and a heat-activatable, cross-linkable polyurethane top coat; (ii) an acetophenone/-formaldehyde resin, optionally modified with epoxy; and (iii) an anti-corrosion primer based on an epoxy-modified high molecular copolyester-urethane-polymer along with a top coat based on a high molecular crosslinked copolyester-urethane-polymer. Neither adhesive is suggested in the prior art for use as an adhesive for CPVC to metal, is effective to provide the adhesion necessary to meet required ASTM test conditions, further provided that the metal strip is coated with the bilayer adhesive resulting from a primer layer, followed by a finish layer and dried prior to being used;
(ii) sequentially coating an epoxy adhesive on the inner conduit, and then coating it on the formed metal conduit, as taught in the '311 patent, fails to provide a bond which meets required test conditions;
(iii) laser welding the metal strip did not provide a continuous weld required to ensure service under pressure because the edges of the metal strip were oxidized;
iv) a gap between the longitudinal edges of the strip, which gap is formed by forming the strip around the inner conduit could not be controlled because the outside diameter of the extruded inner conduit was not controlled within limits now found to be critical;
(v) extruding the outer layer over freshly applied adhesive without simultaneously exerting a vacuum to pressurize the outer layer onto the metal produced composite pipe did not meet required ASTM test conditions; and,
(vi) bendable pipe could only be made with an aluminum conduit having narrowly dfined ranges of thickness and diameter.

By "bendable" is meant that the composite pipe may be bent 180° with a radius six (6) times the pipe's diameter without delaminating a layer or damaging the pipe so as to deleteriously affect its performance under required test conditions. By "bendable" is meant that the composite pipe may be bent 180°. By six (6) times the pipe's diameter is meant that the radius of the bend is 6 times the pipe's diameter. Bendable pipe which functions without delaminating a layer, or damaging the pipe so as to deleteriously affect its performance under required test conditions, has a radius greater than 6 times the pipe's diameter.

The fittings disclosed in the '311 patent are purportedly designed to prevent the delamination of polymer and metal layers at their circumferential boundaries by invading microscopic droplets of fluid. However, delamination typically occurs due to deterioration of the circumferential bond at the surface of the vertical cross-section (normal to the length of the pipe), also referred to as the rim at the terminal end of the pipe.

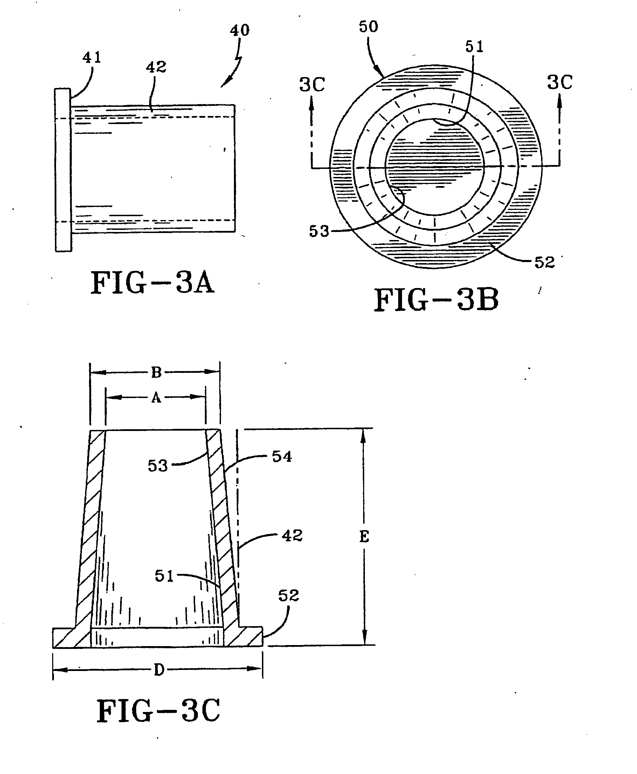

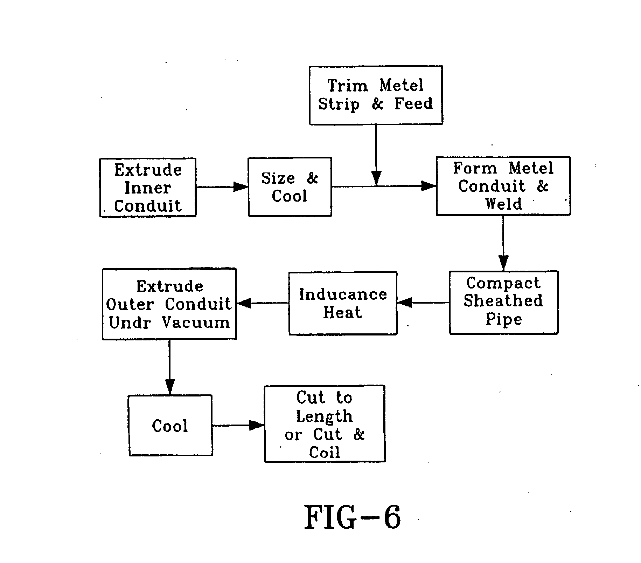

The bushing 9 of the '311 patent has a tubular body (barrel) with a flange extending radially from the barrel. The barrel is inserted in the terminal end of a composite pipe, and when pressed into the end of the pipe, the inner circumferential surface of the flange of the bushing abuts its rim. The circumference of the flange of the bushing has the same diameter as that of the outer diameter of the composite pipe, so that the end of the pipe, with the inserted bushing, may be inserted in an ell, coupling or other fitting. However, though the'311 patent states that FIGS. 3A, 3B and 3C illustrate the insert or bushing 9 which is optionally used to join the multilayer composite pipe of the instant invention and conventional fittings (either conical or cylindrical) it states that the hollow body of the bushing is "cylindrical with a radically (sic) extending flange" (see '311, col 8, lines 59-64). When the cylindrical barrel is coated with adhesive cement and inserted into the end of the pipe, the cement is displaced by being scraped away from the interface with the result that there is insufficient adhesive to affect a seal between the outer surface of the barrel and the inner surface of the inner conduit. Fluid under pressure in the pipe then forces itself through the minimal annular space (left because of the cement being scraped away) between bushing and inner conduit, and the fluid attacks the interfaces of polymer and metal in the rim of the pipe. The same problem applies to the axially extending lip portion 8 of the coupling illustrated in Figs 6A and 6B of the '311 patent.

Further, the '311 patent failed to appreciate that the overall diameter of the composite pipe was to be dictated by the ASTM D2846 Standard-specifications. Also, after testing various wall thicknesses of PVC/CPVC, an outer layer of PVGCPVC less than about 0.6 mm (0.025") thick could not be solvent-cemented in a fitting because the layer lost both its integrity and its bond to the metal when the layer was coated with the solvent-based cement

### SUMMARY OF THE INVENTION

1. A coupling comprising an outer cylindrical barrel having fore and aft ends and comprising a radially inwardly extending flange, wherein the flange coaxially supports a tapered inner barrel-shaped member located at about the midpoint of the barrel having fore and aft ends that converge towards the center with a taper in the range from greater than 0.4° to less than 4°.
2. The coupling of item 1, wherein the outer barrel and inner barrel are both cylindrical.
3. The coupling of any previous item, wherein the flange serves as a common flange against which each terminal end of a pipe may be abutted.
4. The coupling of any of items 1 to 3 wherein said coupling is injection molded from PVC or CPVC.
5. A method of inserting the terminal end of a pipe coated with an adhesive cement into one end of the coupling as defined in any of items 1 to 4.
6. The method of item 5, wherein the pipe is inserted into one end of the coupling, such that the adhesive is retained on the surface of the end of said pipe and pushed against the flange.
7. The method of item 5 or 6, wherein the adhesive cement provides a fluid tight seal between the end of the pipe and said coupling.
8. The method of any of items 5 to 7 wherein the pipe is a composite pipe.
9. A system comprising the coupling of item 1 adhesively cemented to a pipe.

The process for making a composite pipe of arbitrary lenght which can be used with the coupling utilizes a combination of basic steps used in diverse extrusion processes, and steps which are unique to this process. The latter unique steps require coating the aforesaid "bilayer adhesive" on both sides of a metal strip by first applying a primer layer, then a finishing layer in an amount sufficient to adhere the PVC/CPVC to metal so that the composite pipe meets the required ASTM standards. The bilayer adhesive provides at least one coat containing a curing agent which reacts at a temperature above 48.9°C (120°F). Upon drying the resulting adhesive provides a solvent-free thin dry layer. Freshly trimming the longitudinal edges of the strip before the adhesive-coated strip is formed around a first PVC/CPVC extrudate as a metal conduit with closely adjacent edges, and adhering the strip to that first extrudate while laser welding the edges without burning the underlying first extrudate, results in the inner conduit being closely encircled by the metal conduit. Additional steps described hereunder provide the composite pipe with an outer conduit, both inner and conduit being adhesively securely bonded to the metal conduit so as to meet required ASTM standards.

Each step of the overall process has been tailored to incorporate process conditions now found to be critical in the production of the composite pipe described hereinabove, if it is to meet required test conditions for commercial PVC/CPVC pipe. The narrowly defined limitations of the process steps include one requiring that the outer diameter of the metal sheath, after it is adhered to the inner conduit, be circumferentially compacted within specified limits to ensure that the requisite bond strength of the adhesive is attained. The higher the pressure, the better the strength of the bond; but overshooting the pressure, collapses the inner conduit The combinations of steps produce an unexpectedly effective result.

The result of the process is that on a pressure design basis, code-satisfying composite pipe having a diameter in the range from 12.7 mm (0.5") to 50.8 mm (2"), all with identical wall thickness, or different wall thicknesses if desired can now be produced, and all sizes meet required test conditions. For satisfactory solvent-cementing the wall thickness is greater than 0.635 mm and preferably is in the range from 0.8128 mm (0.032") to 1.626 mm (0.064"). The composite pipe meets the requirements of ASTM F1281, Sections 9.3, 9.4, 9.5 and ASTM D2846, Section 9.3.1.; IPS fittings meet the requirements of ASTM F438 and ASTM F439; and CTS fittings meet the requirements of ASTM D2846.

Only the particular bilayer adhesive is found to be effective to provide the adhesion necessary to bond PVC/CPVC to the metal strip well enough to form a composite pipe which will pass required test conditions, further provided that, after being coated as a primer and a top coat layer on each side of the strip to form a twin-sides-coated strip, the bilayer adhesive is dried before being used. The strength of the adhesive bond is unexpectedly so strong that it often results in cohesive failure. Such failure results when, attempting to separate the polymer layer from the metal results in tearing the polymer, or the metal layer bonded to the polymer, rather than separating the polymer from the metal at the bonding interface. No separation at the interface of adhesive and metal is observed.

It is essential that a gap, formed when the longitudinal edges of the metal strip are closely adjacent after the metal is tightly formed over the extruded inner conduit, be such that the weld is continuous and does not have a "hump". A hump is objectionable if its the upper surface rises more than 0.51 mm (0.020") above the surface of the metal sheath, preferably rises less than 0.254 mm (0.010") so that the upper surface of the weld smoothly matches the adjacent circumferential area of the metal conduit. The limited maximum thickness of the metal allows the necessary step of circumferentially compressing the sheathed pipe, as required in a processing step prior to coating the metal-sheathed inner conduit with the outer conduit.

To ensure a continuous longitudinal weld, each of the two edges of the strip, whether aluminum, or ferrous metal such as steel, are trimmed no longer than ten (10), preferably no longer than 1 minute, before being formed around the inner conduit. Oxidation at the edges is a cause of poor welds. Welding freshly cut edges minimizes such oxidation; moreover, the weld is to be effected with a laser having an intensity insufficient to burn the underlying inner conduit vertically spaced apart as stated herein, and decrease the strength of the adhesive bond over the circumferential surface of the inner conduit.

Despite the bilayer adhesive being a good adhesive, the strength of its adhesive bond is not fully developed into a cohesive bond until the metal-sheathed composite is circumferentially compressed to decrease the diameter of the inner conduit and to maintain the outside diameter of the metal conduit within specified limits of ± 0.08 mm (0.003"), and heated.

The process for making the composite pipe of arbitrary length, comprises, extruding a first conduit of poly(vinyl chloride) or chlorinated poly(vinyl chloride) in a first extruder at a temperature in the range from about 182°C (360°F)-215°C (420°F) to provide a hot inner conduit for the composite pipe, the inner conduit having a thickness in the range from 0.8 mm (0.032")-1.0 mm (0.040") and a diameter controlled within ± 0.08 mm (0.003"); vacuum sizing and cooling the hot inner conduit to a temperature in the range from 21°C (70°F)-37.74°C (100°F) and controlling its diameter with a sizing sleeve within limits of ± 0.08 mm (0.003");

feeding a coated strip of aluminum, or ferrous metal, coated on both sides with solvent-free bilayer adhesive and dried, to an edge-trimmer, the metal having a thickness in the range from 0.2 mm (0.008") to 1.2 mm (0.048"), so as to form a twin-sides-coated strip coated with bi layer adhesive in a thickness in the range from 10 µm-50 µm; trimming both sides of the twin-sides-coated strip to have a predetermined width having a tolerance of 0.5 mm (0.020");

feeding the trimmed twin-sides-coated strip longitudinally adjacent to and in close proximity with the inner conduit, and forming the strip around the inner conduit tightly, so as to provide closely adjacent edges with a gap of predetermined width less than 0.5 mm (0.020");

laser welding the strip to close the gap without burning the inner conduit beneath to provide a continuously welded metal conduit snugly encircling the inner conduit;

circumferentially compacting the welded metal conduit to produce a reduction in the outside diameter of the inner conduit in the range from 0.8% to 1.5%;

inductance heating the sheathed and compacted pipe to a temperature in the range from about 149°C (300°F)-171°C (340°F);

extruding a second conduit of poly(vinyl chloride) or chlorinated poly(vinyl chloride) in a second extruder at a temperature in the range from about 182°C (360°F)-215°C (420°F) while exerting a vacuum in the range from about 30.5-55.9 cm (12-22") of mercury to negatively pressurize the annular space between the adhesive-coated metal and the outer conduit being formed, so as to adhesively secure hot outer conduit to the metal, the outer conduit having a thickness in the range from 0.8 mm (0.032")-1.0 mm (0.040") and a diameter controlled within ± 0.08 mm (0.003"); and,

cooling the composite pipe.

The composite pipe formed by the foregoing process, the pipe having an inner and outer wall each having a desired wall thickness of 0.813 mm + 0.203 mm (0.032" +0.008") and with a metal conduit having a thickness in the range from 0.2 mm (0.008")-1.2 mm (0.047") therebetween, is found to meet required test conditions for all pipe having nominal diameters from 12.54 mm (0.5") to 50.8 mm (2"). This pipe, having a thinner wall thickness than corresponding metal pipe, allows higher flow and lower pressure drop in a piping system. When the metal is aluminum, and the composite pipe is required to be bendable, the pipe is required to maintain the curvature desired. Since the aluminum conduit is readily bendable, the thickness of the inner and outer conduits control bendability. Each conduit having a thickness of 0.064" provides the limit of bendability without damaging the pipe, or having the bent pipe return to its pre-bent position to an unacceptably high degree. Thicker metal and thicker polymer layers may be used on steel conduit because the composite steel pipe does not bend.

### BRIEF DESCRIPTION OF THE DRAWING

The foregoing invention will best be understood by reference to the following detailed description of the process steps, and of particular fittings representative of those to be used to make a leak-proof connection between a fitting and an end of the composite pipe, accompanied with schematic illustrations in which like reference numerals refer to like elements, and in which:

Figure 1A (not representative of the present invention) is a perspective view of a longitudinal section of the composite pipe.

Figure 1B (not representative of the present invention) is a perspective view partially in cross-section, of a length of the pipe which has been bent 90°.

Figure 2 (not representative of the present invention) is a side elevational view, partly in cross-section, of a coupling showing the conventional coupling having oppositely directed outwardly tapered ends (or sockets) each dimensioned in accordance to ASTM D2846, section 6.1.3.3. (the taper of each fore and aft end or socket of the coupling is not visible in the drawing).

Figure 3A (not representative of the present invention) is a side elevational view of a conventional PVC/CPVC bushing having a cylindrical barrel as shown in the '311 patent.

Figure 3B (not representative of the present invention) is an end elevational view of the novel bushing with a tapered barrel having dimensions specified below (the taper shown being greatly exaggerated).

Figure 3C (not representative of the present invention) is a cross-section taken along the plane 3C-3C in Fig 3B showing the tapered barrel of the bushing shown in Fig 3B, and the cylindrical barrel of the bushing referred to in the '311 patent in phantom outline.

Figure 4 (not representive of the present invention) is a cross-sectional view of the composite pipe in which the bushing shown in Fig 3 has been inserted. For clarity, the taper in the bushing is not shown.

Figure 5A is a perspective cross-sectional view of a preferred coupling for joining two lengths or coils of pipe without inserting the bushing shown in Fig 3 in an end of each pipe, the coupling having an inner coaxial barrel spaced apart from the inner wall of the pipe by a radially extending inner flange intermediate the ends of the barrel, and each barrel is oppositely tapered (the taper is not shown in this view).

Figure 5B is a cross-sectional view of the coupling shown in Fig 5A, showing the oppositely tapered barrels (the taper is greatly exaggerated).

Figure 6 (not representative of the present invention) is schematic representation of the steps in the process for making the composite pipe shown in Fig 1.

### DETAILED DESCRIPTION OF PREFERRED EMBODIMENTS

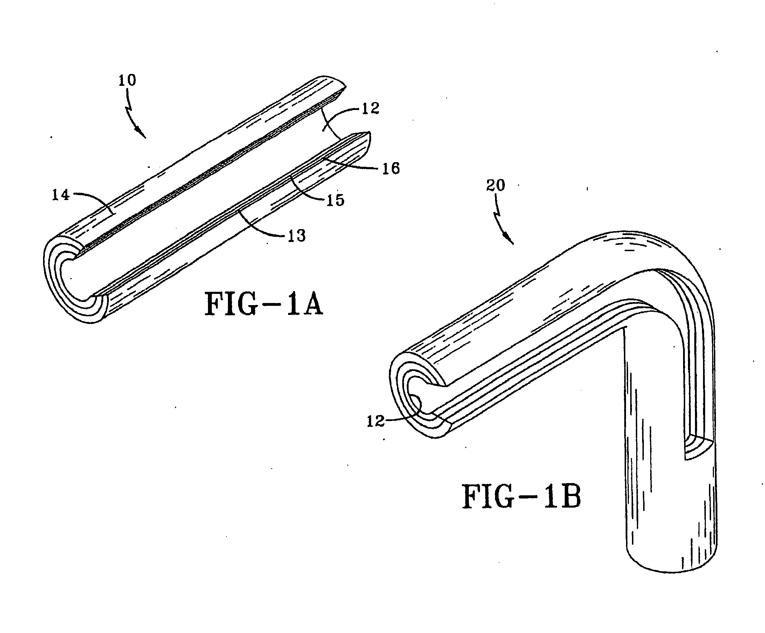

Referring to the figures in the drawing and particularly to Figs. 1A (not representative of the present invention), there is shown a composite pipe referred to generally by reference numeral 10, which comprises an extruded inner conduit 12 of PVC/CPVC; a metal conduit 13, preferably of aluminum, or a ferrous metal formed over and overlying the inner conduit 12; an outer conduit 14 of PVC/CPVC extruded over and overlying the metal conduit 13. An inner adhesive layer 15 of the bi-layer adhesive cohesively bonds the metal conduit 13 to inner conduit 12; and an outer adhesive layer 16 of the bi-layer adhesive cohesively bonds the metal conduit 13 to outer conduit 14. The inner and outer conduits may be extruded from the same polymer or different.

Referring to Fig. 1B (not representative of the present invention), there is shown a length of pipe 20 in which the inner and outer polymer conduits are 19.05 mm (0.75") nominal diameter, each polymer conduit having a wall thickness of 0.813 mm (0.032"); and, the aluminum interlayer is 0.4 mm (0.016") thick. This pipe has been bent to 90° using a bending tool in which the radius of the bend is 11.43 cm (4.5"). To have a stable 90° bend which will maintain its 90° configuration for an indefinite period, the pipe is bent to about 100°. When removed from the bending tool the arms spring back over a short period, less than an hour, to 90° and remain in that position. Though a 90° bend over the specified radius is a severe bend, as seen in the Fig, neither the inner conduit nor the outer conduit has been delaminated, and neither is torn in the radius of the bend.

The wall thickness of either the inner or the outer conduit is narrowly limited because a thickness of less than 0.635 mm (0.025") is too thin to be reliably solvent-cemented; and a thickness greater than 3.18 mm (0.125") has a proclivity to crack in the radius of a bend even if the conduit is cohesively bonded to the metal.

If a conduit is to be made of PVC, extrudable PVC is an ubiquitous compound widely available worldwide, and used to make a wide spectrum of articles, and pipe which meets required test conditions. If a conduit is to be made of CPVC, extrudable CPVC is also widely available worldwide, and used mainly to make pipe which meets required test conditions. Neither needs to be described in great detail, but essentials are provided below.

The molecular weight of PVC, as indicated by inherent viscosity ("I.V.") measurement per ASTM-D1243, may range from 0.2 to 2.0, preferably in the range from 0.4 to 1.6, most preferably from 0.7 to 1.2. Extrusion grade PVC includes numerous additives including processing aid, stabilizer, impact modifier, etc. Most preferred commercially available PVC is Oxyvinyl's Geon® 1344.

Extrudable CPVC typically has a density of in the range from 1.45 to 1.67 g/cm³ at 25°C, preferably in the range of from 1.51-1.58 g/cm³ at 25°C; and, a glass transition temperature (Tg) in the range from 110°C-150°C, preferably in the range from 120°C-140°C, as measured by a differential scanning calorimeter (DSC). As with extrusion grade PVC, extrusion grade CPVC includes numerous additives including processing aid, stabilizer, impact modifier, etc. Most preferred commercially available CPVC for extruding pipe is Temprite® 88620 TAN 309 available from Lubrizol Advanced Materials, Inc.

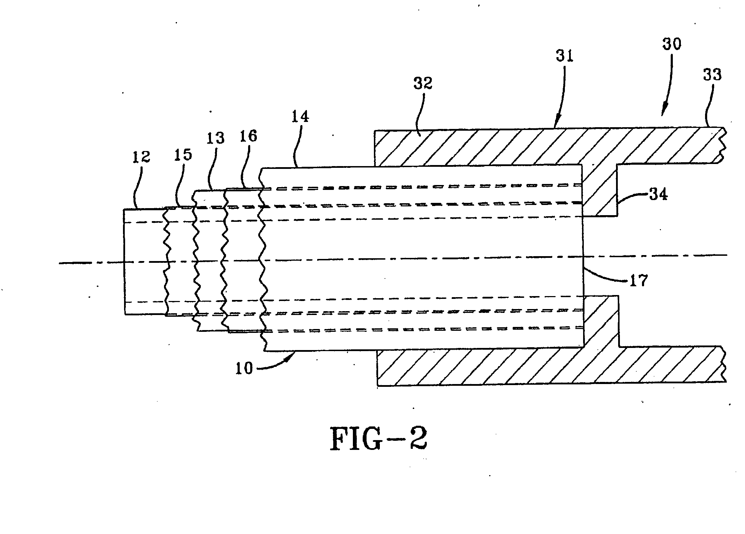

Referring to Fig. 2, (not representative of the present invention) there is schematically illustrated a terminal end of one of two composite pipes 10 (only one pipe is shown) each end having the same nominal diameter, to be coupled with a coupling 30 of PVC/CPVC having a barrel 31 in which opposed fore and aft portions 32 and 33, respectively, are each outwardly tapered so that the diameter of each terminal end of the barrel is provided for as set forth in ASTM 2846 section 6.1.3.1., (the outward taper in each portion of the barrel is not visible in the Fig.).

Within the barrel 31, at about its midpoint, there is a radially extending inner flange 34 against which the rim 17 of the end of the pipe is firmly pressed after the outer surface of the end of the pipe has been coated with adhesive cement so that the ends of the pipe are solvent-cemented (the terminal end of the second pipe is not shown) into the coupling. The inner end of each fore and aft portion closely adjacent to the flange 34, is in the range from 0.025-0.25 mm (0.001-0.010") greater than the outside diameter of the pipe to be inserted in the barrel portion. Before the terminal end of pipe 10 is inserted into the fore portion 32 of the barrel 31, the end is liberally coated with adhesive cement so that both the outer surface of the end and its rim are coated.

The radial flange 34 extends radially inwards for a distance at least equivalent to, preferably 10% greater than the distance between the outer diameter of the flange 31 and the inner diameter of the inner conduit 12. Though the taper in the barrel is slight, it is sufficient to ensure that enough adhesive cement is retained on the outer surface of outer end 14 of the terminal end and on the rim 17 until it is pressed against the flange 34. Since the circumferential ends of inner and outer conduits 12 and 14 respectively are thus solvent-cemented against the flange 34, the boundary between the inner conduit 12 and the metal conduit 13, and boundary between outer conduit 14 and the metal conduit 13, are each sealed against penetration of microscopic droplets of water or other fluid under pressure in the pipe 10.

The terminal end of the pipe 10 may be analogously solvent-cemented with a solvent-based cement into a PVC/CPVC fitting having at least one pipe-receiving barrel, such as a cap, an ell, street ell, or tee, appropriately dimensioned for the size of the pipe. Each barrel of an ell is outwardly tapered and the inner portion of the barrel adjacent the bend has a diameter in the range from 0.025 mm-0.25 mm (0.001"-0.010") greater than the outside diameter of the pipe. As an assembly of the pipe and pipe fitting is analogous to that shown in Fig. 2, no illustrative figure is provided for it.

Referring to Fig. 3 (not representative of the present invention), and in particular to Fig. 3A, there is shown a conventional metal bushing 40 having a radially outwardly extending peripheral flange 41 and a cylindrical barrel 42, such as is used in PEX pipe. But a metal bushing is not solvent-cementable, and for use herein it was necessary to provide a PVC/CPVC bushing, which to date, was never made.

Referring to Fig. 3B (not representative of the present invention), there is shown an end view of a novel bushing 50 having an inwardly tapered barrel 51 and a radially outwardly extending flange 52. The barrel 51 is tapered from the vertical so that the inner diameter of the end 53 of the barrel, distal from the flange 52, meets the dimensional requirements set forth below for pipe diameters of 1.27 cm (0.5") CTS, 1.91 cm (0.75") CTS and 2.54 cm (1") CTS. Dimensions for larger pipe are determined by analogous computation.

| | Ø"A" inch (mm) | Ø"B" inch (mm) | Ø"D" inch (mm) | Length "E" inch (mm) | Minimum Wall Thickness inch (mm) |
|---|---|---|---|---|---|
| 1/2" | 0.438 ± .005 | 0.445 ± .005 | 0.614 ± .005 | 0.505 ± .005 | 0.045 + 0.008 |
| CTS | (10.95 ± 0.13) | (11.30 ± 0.13) | (15.60 ± 0.13) | (12.70 ± 0.13) | (1.14 + 0.20) |
| 3/4" | 0.678 ± .005 | 0.686 ± .005 | 0.860 ± .005 | 0.705 ± .005 | 0.045 + 0.008 |
| CTS | (17.09 ± 0.13) | (17.42 ± 0.13) | (21.84 ± 0.13) | (17.78 ± 0.13) | (1.14 + 0.20) |
| 1" | 0.913 ± .005 | 0.928 ± .005 | 1.112 ± .005 | 0.905 ± .005 | 0.045 + 0.008 |
| CTS | (23.24 ± 0.13) | (23.62 ± 0.13) | (28.25 ± 0.13) | (22.86 ± 0.13) | (1.14 + 0.20) |

The foregoing dimensions dictate that the inward taper of the barrel is in the range from greater than 0.4° but less than 4° to the horizontal line at the point where the barrel meets the radial flange.

Referring to Fig. 3C, (not representative of the present invention) there is shown a cross-sectional end elevational view along the plane C-C, of the bushing 50 in Fig. 3B. The cylindrical barrel 42 of the conventional bushing 40 is shown in phantom outline while the tapered barrel 51 is not. The outside diameter of the barrel 51 at the flange 52 corresponds to the inside diameter of the inner conduit of pipe 10. When the flange 52 is pressed against the rim 17 of the terminal end of the pipe 10 (see Fig. 2), because the barrel 52 is inwardly tapered, adhesive cement coated on the outside surface of the bushing seals the rim 17 against the flange 52 and prevents infusion of fluid, under pressure in the pipe, into the boundaries of the composite pipe. The end of the barrel 53 indicates the taper.

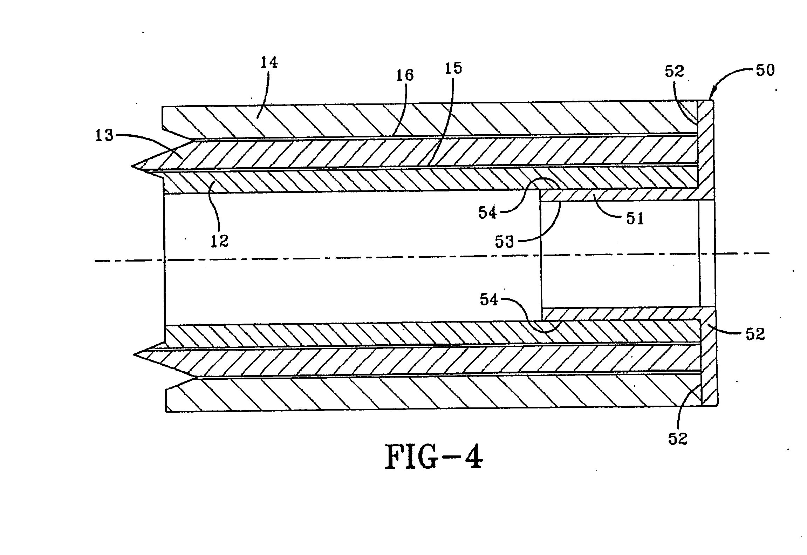

Referring to Fig. 4 (not representative of the present invention), there is shown an assembly of a terminal end 17 of composite pipe 10 and bushing 50 which has been inserted into the pipe's terminal end. Because of the inward taper in the barrel of the bushing, solvent-based cement 54, coated on the outside surface of the barrel 51 and on the facing surface of the flange 52 before the barrel is inserted into the pipe, is not scraped away. A portion of the cement 54 remains on the coated surfaces of the inner surface of the inner conduit 12 and also on the rim 17 of the pipe, resulting in a fluid-tight connection which seals the boundaries between the polymer conduits 12 and 14 and metal conduit 13 against infusion of microscopic droplets of fluid under pressure. Since the circumferential surfaces of the flange 52 and the outer surface of outer conduit 14 have the same diameter, the assembly may be inserted into a standard fitting.

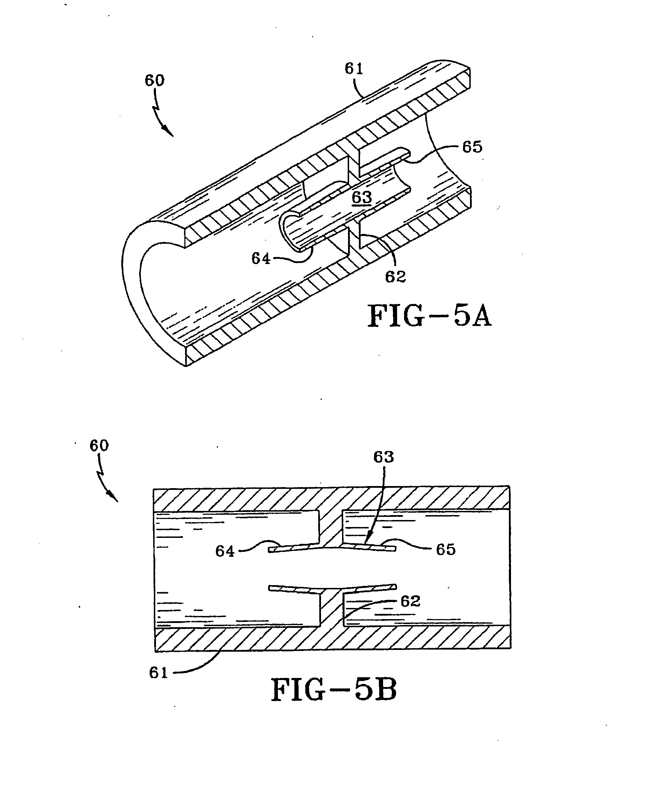

Referring to Fig. 5A, there is shown a preferred coupling 60 having a cylindrical outer barrel 61 having a radially inwardly extending flange 62 located at about the midpoint of the barrel 61, and coaxially supporting a tapered inner barrel-shaped member 63 having opposed fore and aft ends 64 and 65 which converge towards the center with a taper in the range from greater than 0.4°- less than 4°. Each end of the tapered barrels functions as the tapered barrel 51 of the bushing 50 (see Fig. 4) and the flange 62 functions as the flange 51 of the bushing 50, except that the flange 62 serves as a common flange against which each terminal end of a pipe may be abutted. When the surface of a terminal end of pipe 10 is coated with adhesive cement and inserted into one end of the bushing 50, the adhesive is retained on the surface of the end and pushed against the flange 62. Fig. 5B shows the preferred coupling 60 with the tapered ends 64 and 65, where the taper is exaggerated.. As in Fig. 4, when the terminal end of the pipe 10 abuts the flange 62, the adhesive cement provides a solvent-cemented fluid tight seal which also seals boundaries between the polymer conduits 12 and 14 and metal conduit 13 against infusion of microscopic droplets of fluid under pressure.

Referring to Fig. 6 (not representative of the present invention), there is diagrammatically illustrated the process steps for making the composite pipe 10. Each of the couplings and the bushing described hereinabove and all other fittings, such as ells, street ells, tees and the like, which are to be made having outwardly tapered openings may be injection molded in a conventional manner with appropriately configured dies. The process steps for either PVC or CPVC are the same except that the process conditions are changed to accommodate the physical properties of the polymer being extruded. The process conditions provided below are for CPVC, and more particularly for making a composite pipe having a nominal diameter of 12.54 mm (0.50") with each inner and outer conduit having a thickness of 0.813 mm (0.032") between which an aluminum conduit having a thickness of 4 mm (0.016") is sandwiched.

Except for the step of trimming the edges of an adhesive-coated metal strip, coated on both sides, which step may be undertaken independently of the other processing steps, provided the strip is trimmed just prior to feeding it to a metal forming and welding step, the process steps are sequential, and are as follows:

Extruding the inner conduit:
Powder of Temprite®88620 TAN 309 CPVC are fed from a hopper into a twin screw extruder operating at a temperature in the range from 193°C-204°C (380°F-400°F) to produce an extrudate having an outside diameter of 15.9 mm (0.625").

(2) Cooling inner conduit:
The hot inner conduit is vacuum sized in a sizing die and sleeve to control the outside diameter of the inner conduit within limits of ± 76.2 µm (0.003"), and extruding through a pipe die to produce a thin-walled pipe 0.8 mm (0.032") thick, which is controlled to +0.008 mm (0.0003"). The sized conduit is then cooled to a temperature in the range from 21°C (70°F)-37.74°C (100°F). Preferably the cooled inner conduit is drawn through a dancing roll to control the diameter and thickness of the conduit before the inner conduit is fed to a metal forming and welding machine.

(2) Feeding the aluminum strip to a trimmer:
The edges of a strip of aluminum, 5.7 cm (2.25") wide and 0.4 mm (0.016") thick, coated on both sides with the bi layer adhesive which is dried to form a thin dry layer having a thickness in the range from 10 µm-50 µm, are freshly trimmed to a width of 5.0 cm (1.97") with a tolerance of ± 50.8 µm (0.002").

(3) Forming and welding a metal strip to form the metal conduit:
The trimmed metal strip is fed immediately beneath the inner conduit as it enters the forming and welding machine. The strip is formed around the inner conduit so that the trimmed edges provide a gap, about 0.25 mm (0.010"), small enough to allow a laser of appropriate intensity to continuously butt-weld the strip longitudinally, so as to form the metal conduit. The intensity of the laser is chosen so as not to damage the polymer of the inner layer by overheating the sheathed inner conduit, yet provide a weld that completely penetrates the metal thickness.

(4) Compacting the sheathed inner conduit:
To ensure that the outside diameter of the sheathed inner conduit is maintained within ± 0.254 mm (± 0.010"), it is circumferential ly compacted between each of a succession of oppositely disposed grooved rollers; by calculation, the tolerance of the outside diameter is maintained by reducing the outside diameter of the inner conduit in the range from 0.8% to 1.5%.

(5) Heating the compacted sheathed inner conduit:
The compacted sheathed inner conduit is heated in an inductance heater to a temperature in the range from about 149°C (300°F)-171°C (340°F) to activate the bilayer adhesive, ensure that the adhesive bond obtained will only fail in cohesive failure, and preheat the metal surface to a temperature at which the metal is to be coated with the succeeding outer layer of polymer.

Extruding the outer conduit:
The heated sheathed inner conduit is led into the sealed antechamber of a crosshead die where a vacuum is exerted just prior to having the outer conduit extruded onto the heated adhesive-coated metal. A vacuum in the range from 31-56cm (12-22") of mercury, creates a negative pressure around the metal conduit so that the polymer extruded onto it is forcefully sucked onto the adhesive-coated metal, ensuring activation of the adhesive and a cohesive bond when the polymer coats the adhesive at a temperature in the range from 193°C-204°C (380°F-400°F). The die ensures that the thickness of the outer conduit is 0.032" controlled within ± 50.8 µm (0.002").

(7) Cooling the completed composite pipe:
The hot composite pipe from the crosshead die is cooled in a cooling water tank to room temperature before it is either cut into lengths of chosen length, or rolled into coils of pipe of chosen length. Upon testing, it is found to meet required test conditions calculated to allow the pipe to provide decades of service in a piping system.

It will be evident from the foregoing that the widely ranging wishful disclosures in the prior art fall far short of suggesting the narrowly defined steps required to make the composite pipe which will meet required test conditions.

Criticality of the strength of the adhesive bond is evidence by data showing that adhesion of either PVC or CPVC to the aforementioned metals, using adhesives suggested or identified in the prior art, fails to provide a cohesive bond. For the composite pipe to meet required test conditions it is essential that each polymer conduit be acceptably bonded to the metal conduit. By "acceptably bonded" is meant that the bond of the polymer to the metal, without any mechanical engagement or interlocking of the polymer and metal, is at least 0.9 kg/cm (5 lb.ft/inch), measured at 90° peel and a strain rate of 5.08 cm/min (2 ins/min).

The minimum peel strengths for 2.54 cm (1") nominal diam pipe, with inner and outer conduits of CPVC, each 1.016 mm (0.040") thick with a 1.016 mm (0.040") thick aluminum interlayer, are given in lb.ft/in (N/mm) at three different temperatures, for Bynel® 40-E529, a commercially available polyolefin-based adhesive, and the particularly effective Mercural bilayer adhesive, are presented in Table 1 below:

**TABLE 1**

| | 22°C | 60°C | 82°C |
|---|---|---|---|
| Bynel® polyolefin-based adhesive | 20 (3.50) | 10 (1.75) | 7.5 (1.3) |
| The Mercural bilayer adhesive | 40 (7) | 20 (3.50) | 15 (2.63) |

Additional Ring Peel Tests with Various. Adhesives:
Each of the following commercially available adhesives is applied in a thin layer to a 19.05 mm (0.75") nominal diameter aluminum pipe by brushing on the adhesive. An outer layer of Temprite® 88620 TAN 309 CPVC about 1.016 mm (0.040") is then extruded over the aluminum pipe. The cooled, coated pipe is then slit longitudinally over a short distance, at least sufficient to permit one edge of the slit polymer to be gripped and peeled away from the circumferential surface of the pipe as set forth in greater detail in ASTM D3167. Only the test at 82°C is conducted to determine whether it passes. Failure of this test renders the adhesive unusable.

| Adhesive | Passed/Failed |
|---|---|
| *Dynapol® S-1227; Dynapol® P-1500; and Dynapol® S-1247 | Failed |
| **Estane® X-4809 and Estane® 58271 | Failed |
| * Dynapol® brand adhesives are high molecular weight copolyesters | |
| ** Estane® brand adhesives are polyurethanes | |

Criticality of the thickness of the PVC/CPVC conduit is demonstrated by the following data which shows that a thickness greater than 3.18 mm (0.125") fails to provide a reliable cohesive bond with the bilayer adhesive; and a thickness less than 0.635 mm (0.025") fails to provide a solvent-cementable conduit because the thin circumferential layer of outer conduit to which adhesive cement is applied, has a proclivity to be displaced or to slide off the metal conduit when the terminal end of cement-coated pipe is inserted into the barrel of a fitting. The data presented below arc visual observations which indicate whether the outer conduit at the terminal end of the pipe has been displaced. Any displacement will cause the joint to fail under required test conditions.

Three samples of each may be tested. The data are as follows:

| Nominal Diameter of Pipe | Wall Thickness | Failed/Pass |
|---|---|---|
| 19.05 mm (0.75") | 3.18 mm (0.125") | Failed |
| 19.05 mm (0.75") | 0.635 mm (0.025") | Failed |
| 19.05 mm (0.75") | 0.813 mm (0.032") | Passed |
| 19.05 mm (0.75") | 1.016 mm (0.040") | Passed |
| 19.05 mm (0.75") | 1.626 mm (0.064") | Passed |

Hydrostatic Sustained Pressure Testing of Assembled Pipe and Fittings:
Six sets of solvent-cemented fittings and 19.05 mm (0.75") nominal diameter pipe with CPVC inner and outer conduits each having a wall thickness of 1.016 mm (0.040") and an aluminum conduit having a thickness of 1.0 mm (0.040"), having its terminal ends fitted with bushings prior to being inserted in ells, are pressurized to 3.9 MPa (551 psi) for 6 minutes @ 82.2°C (180°F).

All samples pass.

Six additional sets of solvent-cemented fittings and 19.05 mm (0.75") nominal diameter composite CPVC pipe, similar to those used above, are pressurized to 2.88 MPa (403 psi) for 4 hours @ 82.2°C (180°F).

All samples pass.

Analogous results would be expected with sets of solvent-cemented fittings with PVC inner and outer conduits, and mixed inner and outer PVC/CPVC conduits.

## Claims

1. A coupling (60) comprising an outer cylindrical barrel (61) having fore and aft ends and comprising a radially inwardly extending flange (62), wherein the flange (62) coaxially supports a tapered inner barrel-shaped member (63) located at about the midpoint of the barrel (61) having fore and aft ends (64, 65) that converge towards the center with a taper in the range from greater than 0.4° to less than 4°.

2. The coupling (60) of claim 1, wherein the outer barrel (61) and inner barrel (63) are both cylindrical.

3. The coupling (60) of any previous claim, wherein the flange serves as a common flange against which each terminal end of a pipe may be abutted.

4. The coupling (60) of any of claims 1 to 3 wherein said coupling (60) is - injection molded from PVC or CPVC.

5. A method of inserting the terminal end of a pipe (10) coated with an adhesive cement into one end of the coupling (60) as defined in any of claims 1 to 4.

6. The method of claim 5, wherein the pipe (10) is inserted into one end of the coupling (60), such that the adhesive is retained on the surface of the end of said pipe (10) and pushed against the flange (62).

7. The method of claim 5 or 6, wherein the adhesive cement provides a fluid tight seal between the end of the pipe (10) and said coupling (60).

8. The method of any of claims 5 to 7 wherein the pipe (10) is a composite pipe.

9. A system comprising the coupling (60) of claim 1 adhesively cemented to a pipe (10).

## Patentansprüche

1. Kupplung (60), umfassend eine zylindrische Außenfassung (61) mit einem vorderen und hinteren Ende, die einen sich radial nach innen erstreckenden Flansch (62) umfasst, wobei der Flansch (62) koaxial ein sich verjüngendes tonnenförmiges Innenelement (63) stützt, das sich etwa in der Mitte der Fassung (61) befindet, die das vordere und das hintere Ende (64, 65) aufweist, die zur Mitte hin mit einem Kegelwinkel im Bereich von mehr als 0,4° bis weniger als 4° zusammenlaufen.

2. Kupplung (60) gemäß Anspruch 1, wobei die Außenfassung (61) und die Innenfassung (63) beide zylindrisch sind.

3. Kupplung (60) gemäß einem der vorstehenden Ansprüche, wobei der Flansch als gemeinsamer Flansch dient, gegen den jedes terminale Ende eines Rohrs angestoßen werden kann.

4. Kupplung (60) gemäß einem der Ansprüche 1 bis 3, wobei die Kupplung (60) aus PVC oder CPVC spritzgegossen ist.

5. Verfahren zum Einsetzen des terminalen Endes eines Rohrs (10), das mit einem Klebstoff beschichtet ist, in ein Ende der Kupplung (60) gemäß einem der Ansprüche 1 bis 4.

6. Verfahren gemäß Anspruch 5, wobei das Rohr (10) so in ein Ende der Kupplung (60) eingesetzt wird, dass der Klebstoff auf der Oberfläche des Endes des Rohrs (10) zurückbleibt und gegen den Flansch (62) gedrückt wird.

7. Verfahren gemäß Anspruch 5 oder 6, wobei der Klebstoff für eine fluiddichte Dichtung zwischen dem Ende des Rohrs (10) und der Kupplung (60) sorgt.

8. Verfahren gemäß einem der Ansprüche 5 bis 7, wobei das Rohr (10) ein Verbundrohr ist.

9. System, umfassend die Kupplung (60) gemäß Anspruch 1, die mit Klebstoff mit einem Rohr (10) verklebt ist.

## Revendications

1. Raccord (60) comprenant un corps extérieur cylindrique (61) ayant des extrémités avant et arrière et comprenant un rebord (62) s'étendant radialement vers l'intérieur, dans lequel le rebord (62) supporte de manière coaxiale un élément intérieur conique en forme de canon (63) placé approximativement au centre du corps (61) ayant des extrémités avant et arrière (64, 65) qui convergent vers le centre avec une pente dans une plage allant de plus de 0,4° à moins de 4°.

2. Raccord (60) selon la revendication 1, dans lequel le corps extérieur (61) et le corps intérieur (63) sont tous les deux cylindriques.

3. Raccord (60) selon l'une quelconque des revendications précédentes, dans lequel le rebord sert de rebord commun contre lequel chaque embout d'un tuyau peut venir en butée.

4. Raccord (60) selon l'une quelconque des revendications 1 à 3, dans lequel ledit raccord (60) est moulé par injection à partir de PVC ou de PVCC.

5. Procédé d'insertion de l'embout d'un tuyau (10) recouvert d'un ciment adhésif dans une extrémité du raccord (60) selon l'une quelconque des revendications 1 à 4.

6. Procédé selon la revendication 5, dans lequel le tuyau (10) est inséré dans une extrémité du raccord (60), de sorte que l'adhésif soit retenu sur la surface de l'extrémité dudit tuyau (10) et poussé contre le rebord (62).

7. Procédé selon la revendication 5 ou la revendication 6, dans lequel le ciment adhésif fournit un joint étanche au fluide entre l'extrémité du tuyau (10) et ledit raccord (60).

8. Procédé selon l'une quelconque des revendications 5 à 7, dans lequel le tuyau (10) est un tuyau composite.

9. Système comprenant le raccord (60) de la revendication 1 collé par adhésif sur un tuyau (10).
